# EUROPEAN PATENT APPLICATION

(11) **EP 0 993 098 A2**
(43) Date of publication of application: **12.04.2000**
(21) Application number: 99203216.9
(22) Date of filing: 01.10.1999
(51) Int. Cl.: H02K 7/10

(54) **Device for regulating an electric generator used in a vehicle**

(30) Priority: 06.10.1998 IT MI982144
(71) Applicant: ADLER S.p.A., Rovereto (Trento) (IT)
(72) Inventor: Morone, Alfio, Milano (IT)
(74) Representative: Raimondi, Alfredo, Dott. Ing. Prof.

(57) **Abstract**

A device for controlling and regulating an electric generator (20), such as an alternator for vehicles, the shaft (2) of which is driven by a driving shaft (1), comprises a pulley (4) on the driving shaft (1) and a pulley (5, 50, 500) on the driven shaft (2), around which pulleys a belt (3) is endlessly mounted, the pulleys (4; 5, 50, 500) respectively consisting of two opposite half-pulleys (40, 41; 6, 7; 60, 70; 600, 700) which are locked in rotation with respect to the associated shafts and the relative distance of which in the axial direction varies automatically according to the speed of rotation of the driving shaft (1).

## Description

The present invention relates to a control and regulating device for electric generators in vehicles with an internal-combustion engine.

Owing to the special nature of the performance which is required of electric generators - namely dynamo and alternator - in vehicles, said generators must have features which are substantially different from those used in fixed installations. In fact, whereas in the latter case a generator may be operated with a practically constant speed of rotation of the rotor, in vehicles which are propelled by an internal-combustion engine and in which the electric generator is directly or indirectly connected to the crankshaft, the speed of rotation of its rotor is subject to continuous variations corresponding to the variations in the speed of the vehicle engine, thereby resulting in a variation in the current output and efficiency of the alternator.

The transmission ratio between crankshaft and electric generator is generally chosen so that, at low engine speeds, the generator is able to supply sufficient current to satisfy the normal requirement, which includes recharging the battery.

Since, in recent years, the electrical energy requirement in vehicles has increased and continues to increase owing to the increased use of auxiliary utility devices installed in them, the battery of the vehicle tends, at low engine speeds, to become discharged owing to insufficient recharging by the alternator.

The present technology solves these problems by increasing the transmission ratio between crankshaft and current generator so as to maintain in all cases a high speed of rotation of the latter.

This increase in the transmission ratio, which is maintained also when there is an increase in the number of revs of the crankshaft, has the disadvantage, however, of causing the current generator to operate in low efficiency zones corresponding to high rpm ranges of the engine.

The technical problem which is posed, therefore, is that of providing a device for controlling and regulating current generators in vehicles with an internal-combustion engine, which is designed to ensure operation of the generator with a high current output and high overall efficiency, independently of the speed of the vehicle engine.

These technical problems are solved according to the present invention by a device for controlling and regulating an electric generator, such as an alternator for vehicles, in which the shaft of the electric generator is driven via a flexible friction-member transmission by a driving shaft, such as the crankshaft of an internal-combustion engine of a vehicle or a shaft connected thereto, and comprises a pulley on the driving shaft and a pulley on the driven shaft, around which pulleys a transmission belt is wound, each pulley respectively consisting of two opposite half-pulleys which are locked in rotation with respect to the associated shafts and the relative axial distance of which varies automatically according to the variations in speed of the driving shaft.

Further characteristic features and advantages of the present invention will emerge more clearly from the following detailed description, provided solely by way of a non-limiting example, of embodiments thereof, with reference to the accompanying drawings, in which:
- Figure 1 shows a partial cross-section, along the respective planes indicated by I-I in Fig. 1a, of a first embodiment of the control and regulating device for electric generators according to the invention in conditions where the engine is running at a low number of revs;
- Figure 1a shows a front view of the device according to Fig. 1, partially sectioned along the plane indicated by IA-IA;
- Figure 2 shows a cross-section similar to that of Fig. 1 in conditions where the engine is running at a medium number of revs;
- Figure 3 shows a cross-section similar to that of Fig. 1 in conditions where the engine is running at a high number of revs;
- Figure 4 shows a partial cross-section, along the respective planes indicated by IV-IV in Fig. 4a, of a second embodiment of the device according to the invention when the engine is running at a low number of revs;
- Figure 4a shows a front view of the device according to Fig. 4, partially sectioned along the plane indicated by IVA-IVA;
- Figure 5 shows a cross-section similar to that of Fig. 4 in conditions where the engine is running at a medium number of revs;
- Figure 6 shows a cross-section similar to that of Fig. 4 where the engine is running at a high number of revs;
- Figure 7 shows a partial cross-section, along the respective planes indicated by VII-VII in Fig. 7a, of a third embodiment of the device according to the invention in conditions where the engine is running at a low number of revs;
- Figure 7a shows a front view of the device according to Fig. 7, partially sectioned along the plane indicated by VIIA-VIIA;
- Figure 8 shows a cross-section similar to that of Fig. 7 in conditions where the engine is running at a medium number of revs; and
- Figure 9 shows a cross-section similar to that of Fig. 7 in conditions where the engine is running at a high number of revs.

With reference to the abovementioned Figures, the device for controlling and regulating an electric generator according to the invention is arranged between a driving shaft 1, which is supported by means of bearings 1c and moved by the shaft of an internal-combustion engine (not shown) for vehicles by means of a pulley 1a keyed onto the shaft 1 itself and an associated belt 1b, and a driven shaft 2 of an electric generator 20, such as an alternator, used in a vehicle.

The driving shaft 1 essentially consists of a counter-shaft of the crankshaft, but could also consist of the latter or of a gear transmission or the like.

This driving shaft or counter-shaft 1 has the function of increasing the speed of rotation of the shaft 2 of the generator with respect to the speed of rotation of the crankshaft.

The transmission between the driving shaft 1 and the driven shaft 2 is provided by means of the device according to the invention which is essentially formed by a V-belt which is endlessly wound onto two pulleys which are keyed onto the respective shaft and each of which consists of two opposite half-pulleys, the relative distance of which varies automatically according to the speed of the driving shaft, as will be explained in greater detail below.

In particular, with reference to the Figures, a pulley 4 of a driving shaft 1 comprises a fixed conical half-pulley 40, for example force-fitted onto the driving shaft 1 on a circumferential shoulder thereof and a conico-cylindrical half-pulley 41 mounted on the shaft by means of its hub portion 41a and axially movable with respect to the fixed half-pulley 40. The movable half-pulley 41 is fastened onto the driving shaft 1 so as not to be able to rotate with respect thereto. This is achieved by a creating a connection system consisting of splined profiles 44a, 44b between the conico-cylindrical half-pulley 41 and a flange 42 rigidly connected to the driving shaft 1 by means of an end screw 43a. The splined profiles are correspondingly formed on the periphery of the flange 42 and on the internal diameter of the cylindrical portion of the movable half-pulley 41. The flange 42, which is bell-shaped, acts as an axial-sliding guide for the movable half-pulley 41 and as a seat for a helical spring 45 which is mounted coaxially with the driving shaft 1 and has its ends arranged between the flange 42 and the movable half-pulley 41 so as to oppose the movement of the latter away from the fixed half-pulley 40.

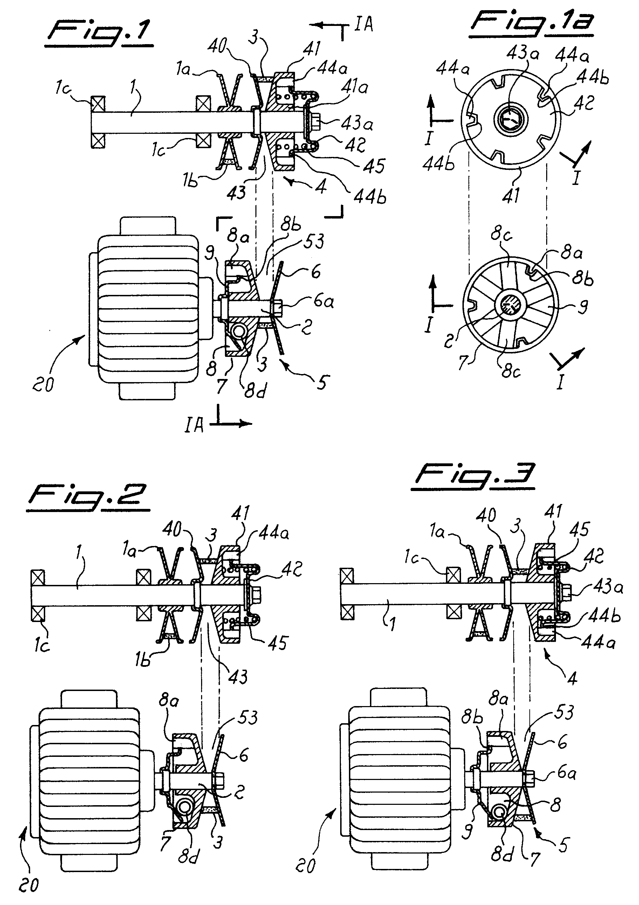

In a first embodiment of the invention illustrated in Figures 1 to 3, a pulley 5 on a driven shaft 2 comprises a fixed conical half-pulley 6 keyed onto the driven shaft 2 by means of a nut 6a and a conical half-pulley 7 axially movable with respect to the fixed half-pulley 6, so as to form a groove 53 of variable width in the axial direction. The movable half-pulley 7 may in fact be made of plastic. The movable half-pulley 7 is fastened onto the driven shaft 2 so as not to be able to rotate with respect thereto. For this purpose the half-pulley 5 has a conico-cylindrical shape and, in its cylindrical portion, opposite to the fixed conical half-pulley 6, has a cavity 8 provided peripherally with projections 8a and intended to engage slidably with the corresponding splined profile 8b of a flange 9 rigidly connected to the driven shaft 2, for example welded to a thicker portion thereof.

As shown in Figure 1a, the cavity 8 has several radial-travel tracks 8c for at least one pair of centrifugal masses 8d which are designed to come into contact with the flange 9 so as to cause the movement, away from it, of the movable half-pulley 7 and therefore its movement towards the fixed half-pulley 6.

In the first embodiment shown in Figures 1 to 3 the centrifugal masses 8b have a cylindrical - optionally hollow - shape and therefore a circular cross-section designed to interact with the flange 9.

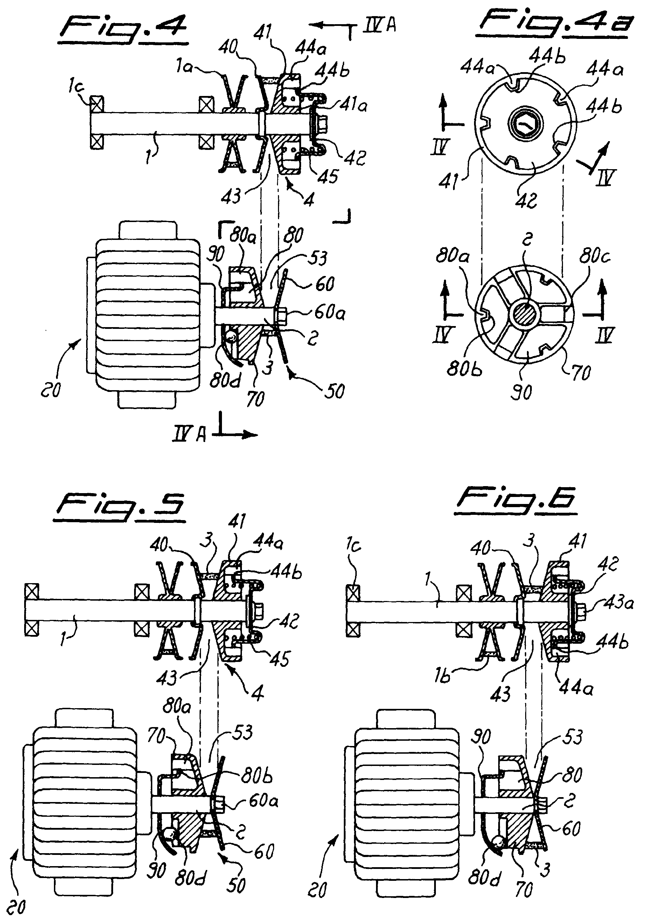

Using similar numbers for similar or identical parts, in a second embodiment of the invention illustrated in Figures 4 to 6, a pulley 50 on a driven shaft 2 comprises a fixed conical half-pulley 60 which is keyed onto the driven shaft 2 by means of a nut 60a and a conical half-pulley 70 which is axially movable with respect to the fixed half-pulley 60.

Also, the pulley 50 has a conico-cylindrical shape and, in its cylindrical portion opposite to the fixed conical half-pulley 60, has a cavity 80 similarly slidable with splined profiles 80a, 80b, as in the first embodiment.

As shown in Figure 4a, the cavity 80 has several radial-travel tracks 80c for at least one pair of centrifugal masses 80d which are intended to come into contact with the flange 9 so as to cause the movement, away from it, of the movable half-pulley 70 and therefore its movement towards the fixed half-pulley 60.

In the second embodiment according to Figures 4 to 6, the centrifugal masses 80d have a spherical shape for interacting with the flange 90 formed in a manner similar to that of the flange 9 of the first embodiment.

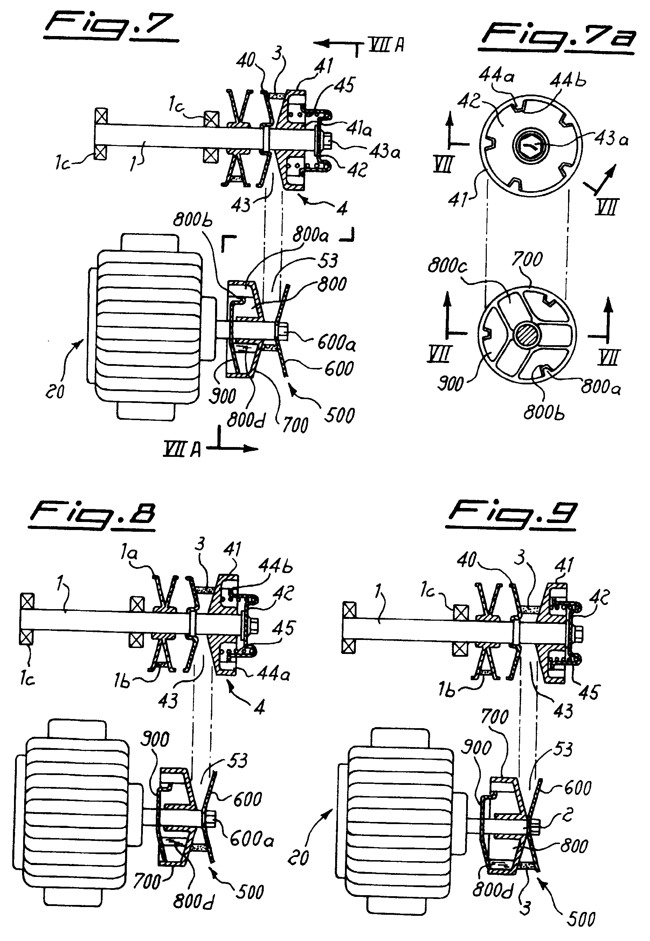

In a third embodiment of the invention illustrated in Figures 7 to 9, a pulley 500 on a driven shaft comprises a fixed conical half-pulley 600 which is keyed onto the driven shaft 2 and a conical half-pulley 700 which is axially movable with respect to the fixed half-pulley 600.

Also, the pulley 500 has a conico-cylindrical shape and, in its cylindrical portion, opposite to the fixed conical half-pulley 600, has a cavity 800 similarly slidable with splined profiles 800a, 800b, as in the first embodiment.

As shown in Figure 7a, the cavity 800 has several radial-travel tracks 800c for at least one pair of centrifugal masses 800d intended to come into contact with the flange 900 so as to cause the movement, away from it, of the movable half-pulley 700 and therefore its movement towards the fixed half-pulley 600.

In the third embodiment according to Figures 7 to 9, the centrifugal masses 800d have a trapezoidal prismatic shape so as to interact with the flange 900 formed in a similar manner to the flange 9 of the first embodiment. The operating principle of the device is the same for all the embodiments described and may be summarised as follows:

When the crankshaft rotates at a low number of revs (Figures 1, 4, 7), the groove 43 of the driving-shaft pulley 4 is kept closed by the thrusting action of the helical opposition spring 45 which abuts against the flange 42 and acts against the movable half-pulley 41.

The groove 53 of the driven-shaft pulley 5, 50, 500 is in the fully open condition and the transmission ratio between driving shaft 1 and driven shaft 2 is high.

The device therefore allows the number of revs of the alternator to be increased with respect to the crankshaft, thereby increasing the current output of the generator in low speed ranges.

With an increase in the number of revs (Figures 2, 5, 7), the centrifugal force of the centrifugal masses 8d, 80d, 800d which are displaced radially far from the axis of the driven shaft 2, and reacting on the respective travel tracks, axially push the movable half-pulley 7, 70, 700 towards the fixed half-pulley 6, 60, 600, causing the groove 53 of the pulleys 5, 50, 500 to close. The V-belt 3, which is unextendable and therefore has a constant length, consequently tends to move onto larger diameters and therefore widen the groove 43 of the pulley 4 on the driving shaft, overcoming the opposing action of the helical spring 45. The transmission ratio between driving shaft 1 and driven shaft 2 is therefore gradually reduced with an increase in the number of revs of the crankshaft. The device therefore allows the number of revs of the alternator to be controlled with respect to the crankshaft, preventing the alternator from running at a needlessly high speed, but providing a high output (high rpm of the engine) and an increase in the overall efficiency of the alternator, in particular at the middle running speeds of the engine. The rigidity of the helical spring 45 and the configuration of the sliding cavity of the driven-shaft pulley are chosen so as to provide the alternator with the characteristic curve which is appropriate for the desired operation.

In particular and as may be determined from the purely exemplary table which follows, it is possible to produce operating conditions which tend to provide a substantially constant number of revolutions of the alternator in a range of revolutions of the crankshaft lying between 1400 and 4900 rpm, this corresponding also to the output of a high amperage and a high efficiency.

**TABLE**

| Alternator (rpm) | Current (A) | Efficiency (%) | Engine (rpm) |
|---|---|---|---|
| 1200 | 22.6 | 62.0 | 256 |
| 1500 | 36.4 | 60.9 | 320 |
| 2000 | 52.5 | 57.6 | 427 |
| 2500 | 61.9 | 55.3 | 534 |
| 3000 | 67.7 | 54.3 | 641 |
| 3500 | 72.8 | 53.8 | 748 |
| 4000 | 76.5 | 52.5 | 854 |
| 4500 | 80.1 | 52.2 | 961 |
| 5000 | 82.7 | 52.1 | 1068 |
| 5500 | 84.5 | 51.6 | 1175 |
| 6000 | 86.0 | 50.8 | 1282 |
| 6500 | 87.4 | 50.1 | 1368 |
| 6500 | 87.4 | 50.1 | 1882 |
| 6500 | 87.4 | 50.1 | 2376 |
| 6500 | 87.4 | 50.1 | 2870 |
| 6500 | 87.4 | 50.1 | 3364 |
| 6500 | 87.4 | 50.1 | 3856 |
| 6500 | 87.4 | 50.1 | 4352 |
| 6500 | 87.4 | 50.1 | 4865 |
| 7000 | 88.1 | 49.1 | 5239 |
| 7500 | 89.2 | 48.3 | 5613 |
| 8000 | 90.0 | 47.7 | 5987 |
| 8100 | 90.7 | 46.9 | 6062 |

## Claims

1. Device for controlling and regulating an electric generator (20), such as an alternator for vehicles, in which the shaft (2) of the electric generator (20) is driven by a driving shaft (1), characterized in that it comprises a pulley (4) on the driving shaft (1) and a pulley (5, 50, 500) on the driven shaft (2), around which pulleys a belt (3) is endlessly mounted, the pulleys (4; 5, 50, 500) respectively consisting of two opposite half-pulleys (40, 41; 6, 7; 60, 70; 600, 700) which are locked in rotation with respect to the associated shafts and the relative distance of which in the axial direction varies automatically according to the speed of rotation of the driving shaft (1).

2. Control and regulating device according to Claim 1, characterized in that said pulley (4) on the driving shaft (1) comprises a fixed conical pulley (40) which is keyed onto said driving shaft (1) and a conical half-pulley (41) which is axially movable with respect to said fixed half-pulley (40) against the opposing action of resilient means (45).

3. Control and regulating device according to Claim 2, characterized in that said movable half-pulley (41) on the driving shaft (1) is coupled, via splined profiles (44a, 44b), to a flange (42) rigidly connected to said driving shaft (1).

4. Control and regulating device according to Claim 2, characterized in that said flange (42) acts as a sliding guide for said movable conical half-pulley (41) and forms the seat housing said resilient means (45).

5. Control and regulating device according to Claim 4, characterized in that said resilient means consist of a spring mounted coaxially with said driving shaft (1) and with its ends abutting between said flange (42) and said movable conical half-pulley (41).

6. Control and regulating device according to Claim 1, characterized in that said movable half-pulley (7; 70; 700) on the driven shaft (2) comprises a concave seat (8; 80; 800) which is located opposite to the groove (53) of the pulley (5; 50; 500) and has radial-travel tracks (8c; 80; 800c) for centrifugal masses (8d; 80d; 800d) acting on a fixed flange (9; 90; 900) fixed onto said driven shaft (2).

7. Control and regulating device according to Claim 6, characterized in that said flange (9; 90; 900) is coupled, via splined profiles (8a, 8b; 80a, 80b; 800a, 800b), to said movable half-pulley (7; 70; 700).

8. Control and regulating device according to Claim 6, characterized in that said centrifugal masses (8d) consist of cylinders which are optionally hollow.

9. Control and regulating device according to Claim 6, characterized in that said centrifugal masses (80d) consist of spheres.

10. Control and regulating device according to Claim 6, characterized in that said centrifugal masses (800d) are prisms with a trapezoidal cross-section.
